# FASCICULE DE BREVET EUROPEEN

(11) **EP 3 931 944 B1**
(45) Date de publication et mention de la délivrance du brevet: **07.01.2026**
(21) Numéro de dépôt: 20713722.5
(22) Date de dépôt: 25.02.2020
(51) Int. Cl.: H02K 1/276, H02K 1/32

(54) **MACHINE ELECTRIQUE TOURNANTE AYANT UN CIRCUIT DE REFROIDISSEMENT DES AIMANTS PAR L'ARBRE**
ROTIERENDE ELEKTRISCHE MASCHINE MIT EINER SCHALTUNG ZUR KÜHLUNG DER MAGNETE ÜBER DIE WELLE
ROTARY ELECTRIC MACHINE HAVING A CIRCUIT FOR COOLING THE MAGNETS VIA THE SHAFT

(30) Priorité: 28.02.2019 FR 1902103
(43) Date de publication de la demande: 05.01.2022
(73) Titulaire: Nidec PSA Emotors, 78955 Carrieres sous Poissy (FR)
(72) Inventeur: DEAC, Ioan, 78300 POISSY (FR); JANNOT, Xavier, 16000 ANGOULEME (FR)
(74) Mandataire: VATD
(86) Numéro de dépôt international: PCT/FR2020/050358
(87) Numéro de publication internationale: WO 2020/174176

(56) Documents cités:
- JP-A- 2014 183 602
- US-A1- 2005 156 471
- US-A1- 2010 194 220
- US-A1- 2013 221 772
- US-A1- 2019 267 859

## Description

### DOMAINE TECHNIQUE DE L'INVENTION

L'invention concerne une machine électrique tournante du type comportant un circuit de refroidissement par l'arbre de rotor permettant de refroidir les aimants du rotor.

### ETAT DE LA TECHNIQUE ANTERIEURE

Actuellement, une machine électrique tournante, comme un moteur électrique de forte puissance permettant de mouvoir un véhicule automobile, nécessite des moyens de refroidissement des différents composants qui la constituent et en particulier du rotor qui comporte généralement des aimants dits permanents qui au-delà d'une certaine température deviennent irréversiblement amagnétiques. De nombreuses solutions de refroidissement du rotor, et donc des aimants qui y sont ménagés, ont été proposées. Par exemple, dans le document US 2010/0194220, il est décrit un tel moteur électrique dont la circulation du circuit de refroidissement s'effectue par un arbre de rotor creux puis axialement par les flasques d'équilibrage du rotor alimentés par des conduits axiaux dans l'arbre de rotor : le refroidissement du rotor ne s'effectue que le long des faces d'extrémité axiale du rotor et un peu à travers l'arbre de rotor. Le refroidissement du rotor n'est pas efficace. Un moteur similaire est également décrit dans le document JP2014183602A.

Dans le document US2005/0156471, il est décrit un moteur électrique dont la circulation du circuit de refroidissement s'effectue par un arbre de rotor creux puis axialement dans un espace annulaire créé entre l'arbre creux et un deuxième arbre tubulaire, craboté sur l'arbre creux et sur lequel est monté serré le rotor. En sortie de l'espace annulaire, le fluide de refroidissement glisse le long des faces d'extrémité axiale du rotor. Le circuit de refroidissement est complexe sans pour autant être plus efficient du fait de la résistance thermique entre le deuxième arbre tubulaire et le rotor.

### EXPOSE DE L'INVENTION

Un but de l'invention est de fournir une machine électrique tournante comportant un circuit de refroidissement par l'arbre qui soit simple et efficace sans présenter les inconvénients précédents.

A cette fin, il est prévu, selon l'invention, une machine électrique tournante selon la revendication 1. Celle-ci comporte un carter comprenant deux paliers, un arbre de rotor monté libre à rotation dans le carter via les paliers, un rotor monté serré sur l'arbre de rotor de sorte à entrainer en rotation l'arbre de rotor et comprenant des première et deuxième faces d'extrémité axiale, le rotor comportant une encoche de stockage d'un aimant permanent s'étendant axialement entre et débouchant sur les première et deuxième faces d'extrémité axiale et un circuit de refroidissement comprenant un conduit d'amenée en fluide de refroidissement ménagé de manière coaxiale dans l'arbre de rotor et un conduit d'alimentation orienté radialement ménagé dans l'arbre de rotor et en communication fluidique avec le conduit d'amenée et le rotor, le rotor comportant deux blocs de rotor et le circuit de refroidissement comportant en outre une entretoise creuse de distribution positionnée axialement en sandwich entre les deux blocs de rotor et en communication fluidique avec le conduit d'alimentation et l'encoche de stockage.

La présence d'une telle entretoise permet de diriger la circulation du fluide de refroidissement de manière simple dans le rotor de la machine électrique. L'utilisation d'une entretoise en une seule pièce facilite sa modélisation ainsi que sa mise en place.

L'entretoise creuse comporte deux parois latérales comportant un orifice d'alimentation en regard de l'encoche de stockage.

Avantageusement, mais facultativement, la machine électrique tournante selon l'invention présente au moins l'une des caractéristiques techniques suivantes :
- l'orifice d'alimentation présente une forme similaire à une forme d'une section de l'encoche de stockage ;
- les parois latérales présentent une forme similaire à une forme des première et deuxième faces d'extrémité axiale ;
- l'entretoise comporte une paroi de fond radialement interne s'étendant en regard d'une surface externe de l'arbre de rotor, la paroi de fond comportant un orifice d'amenée agencé de sorte à venir au droit du conduit d'alimentation ;
- le conduit d'alimentation débouche dans une gorge annulaire ménagée sur une circonférence radialement externe de la surface externe de l'arbre de rotor ;
- l'orifice d'amenée débouche dans la gorge annulaire ;
- la machine comporte un flasque d'équilibrage du rotor monté sur l'arbre de rotor, en appui sur l'une des première et deuxième faces d'extrémité axiale ;
- la machine comporte un deuxième flasque d'équilibrage du rotor monté sur l'arbre de rotor, en appui sur l'autre des première et deuxième faces d'extrémité axiale ; et,
- les blocs de rotor sont des empilements axiaux de tôles de rotor.

Le fluide de refroidissement peut être un gaz, par exemple de l'air, ou un liquide, par exemple de l'eau ou de l'huile.

De préférence, le fluide de refroidissement circule dans les encoches de stockage des aimants permanents.

Le fluide de refroidissement peut être en contact direct avec les aimants permanents du rotor sur une partie d'une surface externe desdits aimants permanents, de sorte à avoir une captation des calories à évacuer de manière optimale et protéger ainsi les aimants permanents du rotor.

On entend par « contact direct » un contact physique avec la surface externe des aimants permanents, qui peut éventuellement être recouverte d'un vernis de protection.

De préférence, le circuit de refroidissement de la machine électrique selon l'invention est dépourvue de canaux, notamment axiaux, disposés dans les encoches de stockage et situés à proximité des aimants permanents. Il est ainsi possible de diriger le fluide de refroidissement de manière simple dans le rotor, sans qu'il soit nécessaire d'ajouter des canaux dédiés au travers des tôles.

De préférence, les tôles de rotor sont toutes sensiblement identiques, à savoir au moins identiques du côté de l'arbre.

L'invention peut convenir tout particulièrement pour des machines de forte puissance.

La vitesse maximale de rotation de la machine peut être élevée, étant par exemple supérieure à 10 000 tr/min, mieux supérieure à 12 000 tr/min, étant par exemple de l'ordre de 14 000 tr/min à 15 000 tr/min, voire même de 20 000 tr/min ou de 25 000 tr/min. La vitesse maximale de rotation de la machine peut être inférieure à 100 000 tr/min, voire à 60 000 tr/min, voire encore inférieure à 40 000 tr/min, mieux inférieure à 30 000 tr/min.

Le diamètre du rotor peut être inférieur à 400 mm, mieux inférieur à 300 mm, et supérieur à 50 mm, mieux supérieur à 70 mm, étant par exemple compris entre 100 et 200 mm.

### BREVE DESCRIPTION DES FIGURES

D'autres caractéristiques et avantages de l'invention ressortiront à la lecture de la description qui suit d'un mode de réalisation de l'invention. Aux dessins annexés :
[Fig. 1] est un quart de vue tridimensionnelle en coupe d'une machine électrique tournante selon un mode de réalisation de l'invention ;
[Fig. 2] est le quart de vue tridimensionnelle en coupe de la machine de la figure 1 sous une autre orientation ;
[Fig. 3] est un quart de vue de détail tridimensionnelle en coupe selon III-III illustrant l'agencement du rotor de la machine de la figure 1 ;
[Fig. 4] est une vue partielle tridimensionnelle de l'entretoise creuse de distribution de la machine de la figure 1; et,
[Fig. 5] est une vue de détail d'une variante de réalisation de l'arbre de rotor de la machine de la figure 1.

### DESCRIPTION DETAILLEE D'UN MODE DE REALISATION

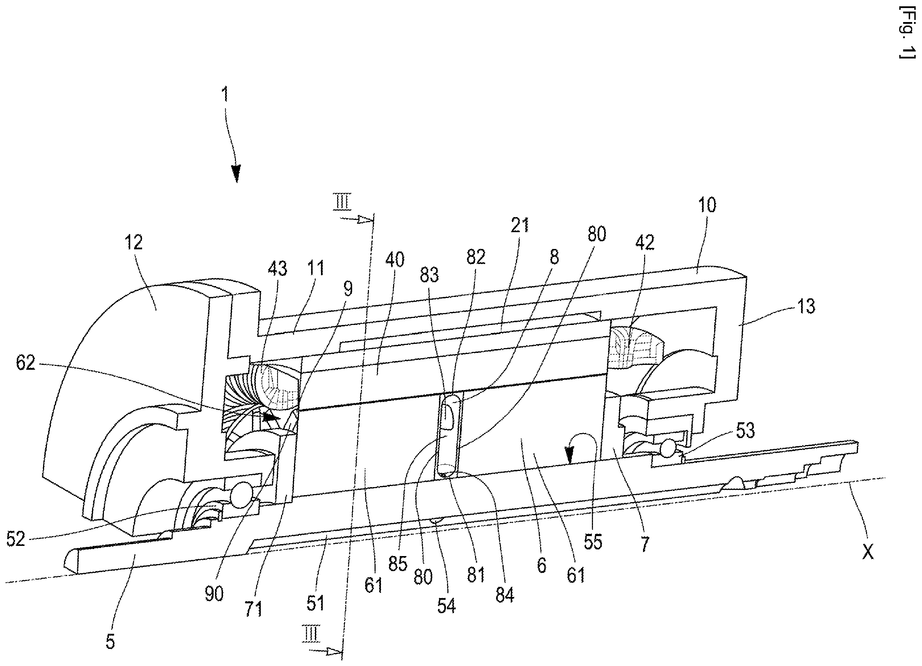

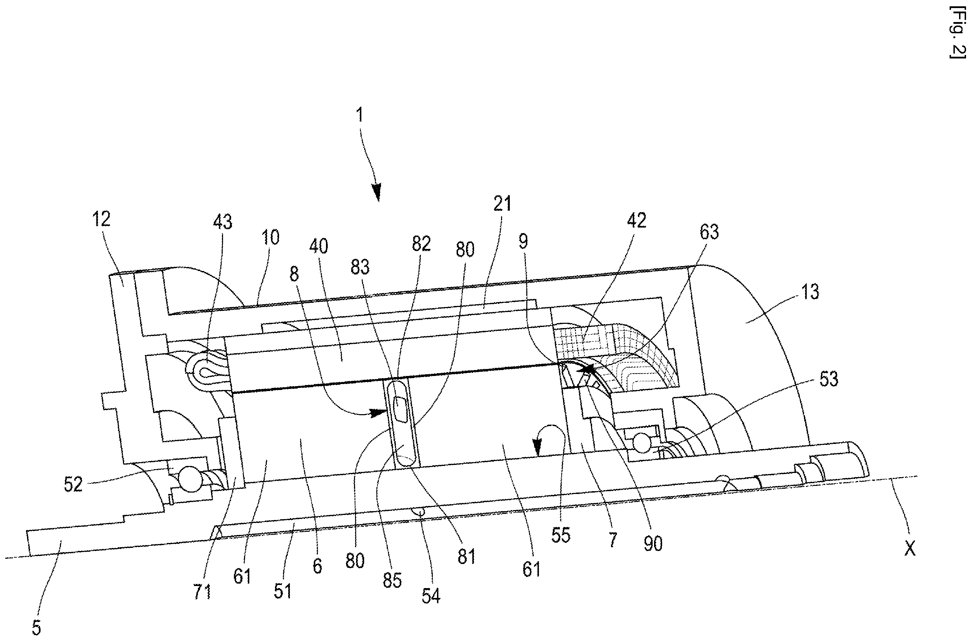

En référence aux figures 1 à 3, nous allons décrire un mode de réalisation d'une machine électrique tournante 1 selon l'invention.

La machine électrique tournante 1 selon l'invention comporte un carter 10 formé, ici, d'un couvercle de carter 12 et d'un corps de carter 11 comprenant un fond 13. La machine électrique tournante 1 selon l'invention comporte en outre, ménagé au sein du carter 10, un rotor 6 monté fixe sur un arbre de rotor 5 d'axe longitudinal X. L'arbre de rotor 5 est maintenu dans le carter 10, libre à rotation, par un palier 52 dans le couvercle de carter 12 et par un palier 53 dans le fond 13 du corps de carter 11.

D'autre part, la machine électrique tournante 1 selon l'invention comporte un stator monté fixe dans le carter 10 de sorte à entourer complètement le rotor 6. Le stator comprend, ici, un corps de stator 40 et un bobinage 41 reçu longitudinalement dans le corps de stator 40 et présentant des têtes de bobine 42,43 s'étendant en saillie longitudinalement de part et d'autre du corps de stator 40. La machine électrique tournante 1 selon l'invention comporte en outre, ici, une chambre annulaire de refroidissement 21 ménagée, en sandwich, entre le corps de stator 40 et une paroi latérale du corps de carter 11 du carter 10.

Le rotor 6 comprend ici deux blocs de rotor 61 qui peuvent être monoblocs ou un empilement axial de tôles de rotor. L'empilement est une solution privilégiée dans la réalisation de la machine électrique tournante 1 selon l'invention. Le rotor 6 comporte des première 62 et deuxième 63 faces d'extrémité axiale. La première face d'extrémité axiale 62 fait partie de l'un des blocs de rotor 61 et la deuxième face d'extrémité axiale 63 fait partie de l'autre des blocs de rotor 61. De plus, le rotor 6 comporte au moins une encoche de stockage 9 d'un aimant permanent 90 s'étendant axialement entre et débouchant sur les première 62 et deuxième 63 faces d'extrémité axiale. Ici le rotor 6 comporte une série d'encoches de stockage 9 uniformément réparties sur une circonférence du rotor 6, chaque encoche de stockage 9 comporte un aimant permanent 90. Les encoches de stockage 9 présentent des orientations radiales différentes : deux encoches de stockage 9 adjacentes circonférentiellement forment sensiblement un « V ». Dans le mode de réalisation illustré, les deux blocs de rotor 61 comportent chacun la série d'encoches de stockage 9 uniformément réparties sur une circonférence du rotor 6, chaque encoche de stockage 9 comporte un aimant permanent 90 qui présente une longueur qui est similaire à une longueur axiale du bloc de rotor 61 considéré. Une fois l'aimant permanent 90 en place dans l'encoche de stockage 9 associée, il existe des interstices entre ledit aimant permanent 90 et ladite encoche de stockage 9 associée.

Pour assurer, un bon maintien du rotor 6 sur l'arbre de rotor 5, la machine électrique tournante 1 selon l'invention comporte en outre un flasque d'équilibrage 7 monté serré sur l'arbre de rotor. Ici illustré aux figures, le flasque d'équilibrage 7 a la forme générale d'une rondelle. Lors d'un montage de la machine électrique tournante 1 selon l'invention, le flasque d'équilibrage 7 vient en appui de serrage sur la deuxième face d'extrémité axiale 63 du rotor 6. Il est à noter qu'un deuxième flasque d'équilibrage 71 est également positionné de la même manière en appui de serrage sur la première face d'extrémité axiale 62. Les deux flasques d'équilibrage 7 et 71 peuvent être identiques.

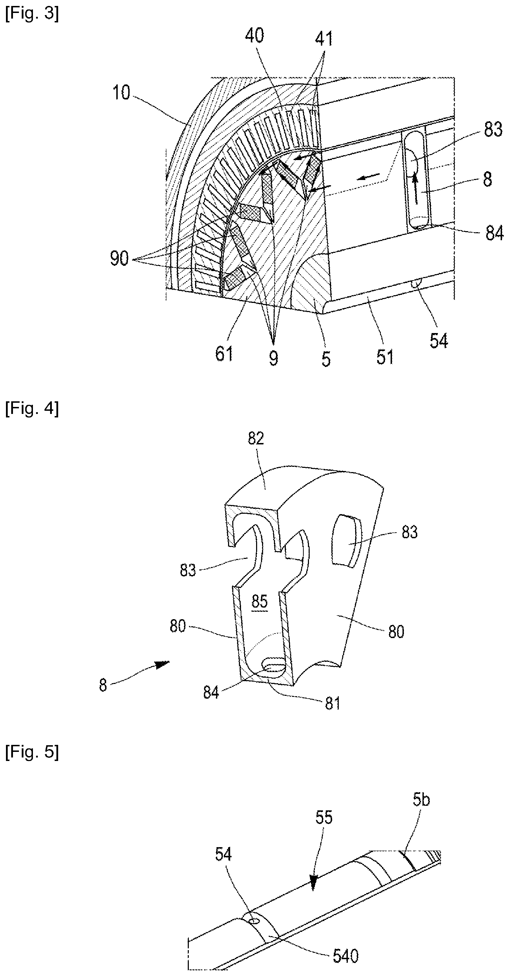

D'autre part, le rotor 6 comporte une entretoise 8 positionnée axialement entre les deux blocs de rotor 61 de sorte à ce que l'entretoise 8, lors d'un assemblage du rotor 6 sur l'arbre de rotor 5, est en appui à la fois sur les deux blocs de rotor 61, prise en sandwich entre les deux dits blocs de rotor 61. Le rotor 6 est monté serré sur l'arbre de rotor 5 de manière connue en soi. L'entretoise 8 est une entretoise creuse de distribution. Elle est par exemple illustrée plus en détail à la figure 4. L'entretoise 8 creuse de distribution comporte une chambre interne 85 délimitée radialement par une paroi de fond 81 radialement interne et une paroi supérieure 82 radialement externe s'étendant en regard et à distance radialement de la paroi de fond 81. La chambre interne 85 est délimitée axialement par deux parois latérales 80 s'étendant en regard et à distance axialement l'une de l'autre. Les parois latérales 80 relient les parois de fond 81 et supérieure 82, de sorte à former l'entretoise 8 creuse de distribution.

La paroi de fond 81 comporte un orifice d'amenée 84 traversant et ménagé radialement à travers la paroi de fond 81. En variante, la paroi de fond comporte une série d'orifices d'amenée 84 uniformément répartis sur une circonférence de la paroi de fond 81.

Les parois latérales 80 sont ici identiques l'une à l'autre et présentent une forme de disques dont les dimensions sont similaires aux dimensions des première 62 et deuxième 63 faces d'extrémité axiale du rotor 6. Chacune des parois latérales 80 comporte un orifice d'alimentation 83 qui est positionné de sorte que, lors d'un assemblage du rotor 6 de la machine électrique tournante 1 selon l'invention, l'orifice d'alimentation 83 soit en regard de l'encoche 9 de stockage du bloc de rotor 61 sur lequel la paroi latérale 80 considérée vient en appui. Ici, l'orifice d'alimentation 83 forme une lumière de sorte à venir simultanément en regard d'une paire d'encoches de stockage 9 adjacentes circonférentiellement qui forment un « V » orienté radialement, la pointe du « V » étant orientée de manière centripète (trois de ces paires sont illustrées à la figure 3). Il y a donc autant d'orifices d'alimentation 83 ménagés, uniformément répartis sur une circonférence, sur chacune des parois latérales 80 qu'il y a de paires (telles que précédemment définies) d'encoches de stockage 9 dans les blocs de rotor 61 du rotor 6. En variante, l'orifice d'alimentation 83 présente une forme similaire à une forme en section de l'encoche de stockage 9 à laquelle il est associé.

Maintenant nous allons décrire plus en détails l'arbre de rotor 5 de la machine électrique tournante 1 selon l'invention. L'arbre de rotor 5 comporte un conduit d'amenée 51 qui est ménagé dans l'arbre de rotor 5 de manière coaxiale à celui-ci. Ainsi, l'arbre de rotor 5 est un arbre creux. L'arbre de rotor 5 comporte en outre au moins un conduit d'alimentation 54 orienté radialement et traversant selon un diamètre l'arbre de rotor 5. Ainsi, le conduit d'alimentation 54 s'étend depuis le conduit d'amenée 51 jusqu'à une surface externe 55 de l'arbre de rotor 5. Le conduit d'alimentation 54 est positionné de sorte à être, ici, à mi-distance des première 62 et deuxième 63 faces d'extrémité axiale du rotor 6, une fois celui-ci monté sur l'arbre de rotor 5.

**Une** fois le rotor 6 monté serré sur l'arbre de rotor 5, le rotor 6 est positionné, et donc plus particulièrement l'entretoise 8 creuse de distribution, sur l'arbre de rotor 5 de telle sorte que le conduit d'alimentation 54 et l'orifice d'amenée 84 de l'entretoise 8 creuse de distribution soit au droit l'un de l'autre, la paroi de fond 81 s'étend en regard de la surface externe 55 de l'arbre de rotor 5. Ainsi, le conduit d'alimentation 54 est en communication fluidique avec le conduit d'amenée 51, d'une part, et, d'autre part, avec la chambre interne 85 de l'entretoise 8 et par conséquent, de manière plus générale avec le rotor 6.

Il ressort de ce qui précède que la machine électrique tournante 1 selon l'invention qui vient d'être décrite comporte un circuit de refroidissement comprenant le conduit d'amenée 51, le conduit d'alimentation 54 et l'entretoise 8 creuse de distribution. Le fluide de refroidissement entre donc par le conduit d'amenée 51, puis passe par le conduit d'alimentation 54 pour venir remplir la chambre interne 85 via l'orifice d'alimentation de l'entretoise 8. Ensuite, le fluide de refroidissement pénètre dans les encoches de stockage 9 via les orifices d'alimentation 83 de l'entretoise 8 creuse de distribution. Le fluide de refroidissement chemine alors le long des aimants permanents 90 en les refroidissant de manière optimale pour sortir des encoches de stockage 9 au niveau des première 62 et deuxième 63 faces d'extrémité axiale du rotor 6. Une fois sorti des encoches de stockage 9, du fait des forces centrifuges dues à la rotation du rotor 6 autour de son axe longitudinal, tout ou partie du fluide de refroidissement chemine le long des première 62 et deuxième 63 faces d'extrémité axiale du rotor puis est projeté sur les têtes de bobine 42 et 43 pour les refroidir à leur tour.

En référence à la figure 5, nous allons brièvement décrire une variante de réalisation de l'arbre de rotor 5b. L'arbre de rotor 5b comporte une gorge annulaire 540 qui fait le tour d'une circonférence de la surface externe 55. Le conduit d'alimentation 54 débouche dans un fond de la gorge annulaire 540. La présence d'une telle gorge annulaire 540 permet de simplifier le positionnement angulaire de l'entretoise 8 creuse de distribution du rotor 6, et donc de l'orifice d'amenée 84 par rapport au conduit d'alimentation 54 : la chambre interne 85 est alors toujours en communication fluidique avec le conduit d'alimentation 54 via la gorge annulaire 540.

La machine électrique tournante 1 selon l'invention qui vient d'être décrite permet de réaliser un circuit de refroidissement du rotor 6, et en particulier des aimants permanents 90 du rotor 6 par un contact direct du fluide de refroidissement sur une partie d'une surface externe desdits aimants permanents 90, de sorte à avoir une captation des calories à évacuer de manière optimale et protéger ainsi les aimants permanents 90 du rotor 6.

La machine électrique tournante 1 selon l'invention qui vient d'être décrite peut être une machine synchrone ou asynchrone. Elle est notamment une machine de traction ou de propulsion de véhicules automobiles électriques (Battery Electric Vehicle) et/ou hybrides (Hybrid Electric Vehicle - Plug-in Hybrid Electric Vehicle), telles que voitures individuelles, camionnettes, camions, bus, cars. La machine électrique tournante 1 selon l'invention peut être mise en œuvre dans des applications industrielles et/ou de production d'énergie, telles qu'éolienne, bateau, sous-marin.

Bien entendu, il est possible d'apporter à l'invention de nombreuses modifications sans pour autant sortir du cadre de l'invention telle que définie par les revendications.

## Revendications

1. Machine électrique tournante (1) comportant un carter (10) comprenant deux paliers (52,53), un arbre de rotor (5;5b) monté libre à rotation dans le carter via les paliers, un rotor (6) monté serré sur l'arbre de rotor de sorte à entrainer en rotation l'arbre de rotor et comprenant des première (62) et deuxième (63) faces d'extrémité axiale, le rotor comportant une encoche de stockage (9) d'un aimant permanent (90) s'étendant axialement entre et débouchant sur les première et deuxième faces d'extrémité axiale et un circuit de refroidissement comprenant un conduit d'amenée (51) en fluide de refroidissement ménagé de manière coaxiale dans l'arbre de rotor et un conduit d'alimentation (54) orienté radialement ménagé dans l'arbre de rotor et en communication fluidique avec le conduit d'amenée et ale rotor, **caractérisée en ce que** le rotor comporte deux blocs de rotor (61) et **en ce que** le circuit de refroidissement comporte en outre une entretoise (8) creuse de distribution positionnée axialement en sandwich entre les deux blocs de rotor et en communication fluidique avec le conduit d'alimentation et l'encoche de stockage et **caractérisée en ce que** l'entretoise creuse comporte deux parois latérales (80) comportant un orifice d'alimentation (83) en regard de l'encoche de stockage.

2. Machine selon la revendication 1, **caractérisée en ce que** l'orifice d'alimentation (83) présente une forme similaire à une forme d'une section de l'encoche de stockage.

3. Machine selon la revendication 1 ou 2 **caractérisée en ce que** les parois latérales présentent une forme similaire à une forme des première et deuxième faces d'extrémité axiale.

4. Machine selon l'une des revendications 1 à 3, **caractérisée en ce que** l'entretoise comporte une paroi de fond (81) radialement interne s'étendant en regard d'une surface externe de l'arbre de rotor, la paroi de fond comportant un orifice d'amenée (84) agencé de sorte à venir au droit du conduit d'alimentation.

5. Machine selon l'une des revendications 1 à 4, **caractérisée en ce que** le conduit d'alimentation débouche dans une gorge annulaire (540) ménagée sur une circonférence radialement externe d'une surface externe (55) de l'arbre de rotor.

6. Machine selon les revendications 4 et 5, **caractérisée en ce que** l'orifice d'amenée (84) débouche dans la gorge annulaire.

7. Machine selon l'une des revendications 1 à 6 **caractérisée en ce qu'**elle comporte un flasque d'équilibrage (7) du rotor monté sur l'arbre de rotor, en appui sur l'une (63) des première et deuxième faces d'extrémité axiale.

8. Machine selon la revendication 7, **caractérisée en ce qu'**elle comporte un deuxième flasque d'équilibrage (71) du rotor monté sur l'arbre de rotor, en appui sur l'autre (62) des première et deuxième faces d'extrémité axiale.

9. Machine selon l'une des revendications 1 à 8, **caractérisée en ce que** les blocs de rotor sont des empilements axiaux de tôles de rotor.

## Patentansprüche

1. Rotierende elektrische Maschine (1) mit einem Gehäuse (10) mit zwei Lagern (52, 53), einer über die Lager frei drehbar im Gehäuse gelagerten Rotorwelle (5; 5b), einem auf der Rotorwelle fest angeordneten Rotor (6) zum Drehen der Rotorwelle und mit ersten (62) und zweiten (63) axialen Endflächen, wobei der Rotor Eine Lagernut (9) eines sich axial zwischen der ersten und der zweiten axialen Endfläche erstreckenden Permanentmagneten (90) und ein Kühlkreislauf mit einer koaxial in der Rotorwelle angeordneten Kühlmittelzuleitung (51) und einer radial in der Rotorwelle angeordneten Zuleitung (54) in Fluidverbindung mit der Rotorleitung Rotor und Rotor, **dadurch gekennzeichnet, dass** der Rotor zwei Rotorblöcke (61) aufweist und dass der Kühlkreislauf ferner einen hohlen Abstandhalter (8) aufweist, der axial zwischen den beiden Rotorblöcken angeordnet ist und in Fluidverbindung mit der Zufuhrleitung und der Lagerkerbe steht, und **dadurch gekennzeichnet, dass** der hohle Abstandhalter zwei Seitenwände (80) mit einer Zufuhröffnung (83) aufweist Blick auf die Lagerkerbe.

2. Maschine nach Anspruch 1, **dadurch gekennzeichnet, dass** die Zuführöffnung (83) eine Form aufweist, die einer Querschnittsform der Lagerkerbe ähnelt.

3. Maschine nach Anspruch 1 oder 2, **dadurch gekennzeichnet, dass** die Seitenwände eine der Form der ersten und zweiten axialen Endflächen ähnliche Form aufweisen.

4. Maschine nach einem der Ansprüche 1 bis 3, **dadurch gekennzeichnet, dass** der Abstandhalter eine radial innere Bodenwand (81) aufweist, die sich gegenüber einer Außenfläche der Rotorwelle erstreckt, wobei die Bodenwand eine Zuführungsöffnung (84) aufweist, die so angeordnet ist, dass sie an die Zuführungsleitung anliegt.

5. Maschine nach einem der Ansprüche 1 bis 4, **dadurch gekennzeichnet, dass** die Zuleitung in eine ringförmige Nut (540) mündet, die an einem radial äußeren Umfang einer Außenfläche (55) der Rotorwelle ausgebildet ist.

6. Maschine nach den Ansprüchen 4 und 5, **dadurch gekennzeichnet, dass** die Zuführöffnung (84) in die Ringnut mündet.

7. Maschine nach einem der Ansprüche 1 bis 6, **dadurch gekennzeichnet, dass** sie einen auf der Rotorwelle angeordneten Ausgleichsflansch (7) für den Rotor aufweist, der an einer (63) der ersten und zweiten axialen Endflächen anliegt.

8. Maschine nach Anspruch 7, **dadurch gekennzeichnet, dass** sie einen zweiten Ausgleichsflansch (71) des Rotors aufweist, der auf der Rotorwelle montiert ist und an der anderen (62) der ersten und zweiten axialen Endflächen anliegt.

9. Maschine nach einem der Ansprüche 1 bis 8, **dadurch gekennzeichnet, dass** die Rotorblöcke axiale Stapel von Rotorblechen sind.

## Claims

1. Rotating electric machine (1) consisting of a case (10) consisting of two bearings (52.53), a rotor shaft (5;5b) mounted free of rotation in the crankcase through the bearings, a rotor (6) mounted tight on the rotor shaft to rotate the rotor shaft and comprising first (62) and second (63) axial end faces, the rotor having a storage notch (9) of a permanent magnet (90) extending axial between and leading to the first and second axial end faces and a cooling circuit comprising a cooling fluid inlet duct (51) co-axial in the rotor shaft and a power supply duct (54) radially positioned in the rotor shaft and in fluidial communication with the inlet duct and the rotor, **characterized by** the fact that the rotor has two rotor blocks (61) and that the cooling circuit also has a spacer (8), which is positioned axial in sandwich between the two rotor blocks and in fluid communication with the power duct and the storage notch, and that the hollow spacer has two side walls (80)) with a power outlet (83) next to the storage notch.

2. Machine according to Claim 1, characterized as the power outlet (83) has a shape similar to a shape of a section of the storage notch.

3. Machine according to Claim 1 or 2, characterized as lateral walls have a shape similar to a shape of the first and second axial end faces.

4. Machine according to one of the claims 1 to 3, characterized as the spacer has a radially internal bottom wall (81) extending next to an external surface of the rotor shaft, the bottom wall having a inlet (84) arranged so as to come to the right of the feed duct.

5. Machine according to one of the claims 1 to 4, characterized as the feed duct opens in a ring throat (540) on a radially external circumference of an external surface (55) of the rotor shaft.

6. Machine according to claims 4 and 5, characterized as the inlet of the inlet (84) opens into the ring throat.

7. Machine according to one of the claims 1 to 6 **characterized in that** it includes a balancing flask (7) of the rotor mounted on the rotor shaft, in support of one (63) of the first and second axial end faces.

8. A machine according to Claim 7, characterized as having a second balancing flask (71) of the rotor mounted on the rotor shaft, in support of the other (62) of the first and second axial end faces.

9. Machine according to one of the claims 1 to 8, characterized as rotor blocks are axial stacks of rotor sheet.
